# EUROPEAN PATENT SPECIFICATION

(11) **EP 1 533 877 B1**
(45) Date of publication and mention of the grant of the patent: **31.03.2010**
(21) Application number: 02751193.0
(22) Date of filing: 25.07.2002
(51) Int. Cl.: H02B 7/06, H01F 27/40

(54) **Compact transformer station**
Trafo-Kompaktstation
Poste de transfomation compact

(43) Date of publication of application: 25.05.2005
(73) Proprietor: Grupo Ormazabal, S.A., 48011 Bilbao (ES)
(72) Inventor: ORMAZABAL OCERIN, Javier, E-48011 Bilbao (ES)
(74) Representative: Carpintero Lopez, Francisco
(86) International application number: PCT/ES2002/000375
(87) International publication number: WO 2004/012312

(56) References cited:
- EP-A- 0 671 795
- EP-A- 0 822 632
- DE-A- 19 954 993
- DE-B- 1 036 976
- ES-A- 2 037 590
- ES-A- 2 155 037
- GB-A- 2 036 451
- US-A- 1 859 969
- US-A- 2 397 099
- US-A- 5 280 408

## Description

### PURPOSE OF THE INVENTION

The present invention refers to a modular transformer centre of reduced dimensions, whose evident purpose is that of transforming the high or medium electrical energy into low voltage electrical energy for distribution and consumption.

The purpose of the invention is to provide an electrical transformer centre that includes the medium voltage switchgear, the transformer and the low voltage panel, it is fabricated as a modular assembly, of reduced dimensions, (compact) that simplifies considerably the operations of installation and connections of the transformer centre, minimising electrical faults during installation, operation and maintenance operations of the transformer centre, all of this in a module of reduced dimensions because of which the cost of the transformer centre turns out to be also considerably reduced.

The modular and compact centre subject of the invention is not fabricated as a single unit, or integrated transformer centre, specifically designed, but is formed from the same individual components used in any transformer centre, that is the transformer, high or medium voltage cubicle or and low voltage panel, each of these components being maintained with its own separate identity, in such a way that it is possible to dismantle the high voltage or low voltage switchgear, keeping each element in perfect conditions of use. This characteristic considerably increases the flexibility of the transformer centre compared with single or integrated design solutions.

The modifications introduced in the medium voltage cubicle, to form a protection cubicle, are also object of the invention.

### BACKGROUND OF THE INVENTION.

Electrical transformer centres are basically formed by three elements or fundamental parts, although independent of each other, one of which parts is formed by high or medium voltage cubicles, whereas the second part is formed by a transformer; the third part being formed by a low voltage panel; so that these parts are independent and are electrically connected.

In accordance with a usual configuration for areas of low load density the medium or low voltage cubicle has a line entry, with the outlet, if existing, being carried out by means of a rigid loop. The same incoming cubicle forms the medium voltage position that supplies the transformer, from which, in turn, the low voltage electricity comes out, this transformer outlet being connected to the low voltage panel to which the outlet cables, for distribution and corresponding electrical supply of the installation or building in question, are bolted.

In the aforementioned case, the medium voltage cubicle incorporates the transformer protection, usually by means of fuses, or even using a circuit breaker.

The function of the fuses is to avoid that electrical faults that could occur downstream, that is in the medium voltage leads, the transformer, or the low voltage leads, before the fuses located in the low voltage panel, so that they do not affect the rest of the medium voltage network, in this way limiting the effect of the incident.

Well then, the assembly formed by the high or medium voltage cubicle, the transformer and the low voltage panel are usually, but not always, arranged beneath an enclosure, that must offer sufficient conditions of safety and ergonomics for the operators that include suitable accesses or appropriate spaces for the handling and installation of equipment.

The principal requisite, as regards space, is the need to have a free front, one meter breadth, both in the high voltage and in the low voltage switchgear, as well as an access corridor and safety distances from live parts, and can be accessible to operators or third parties. This results that, in practice, there is a significant amount of space (approximately 8ö10 square meters) needed for the placing of all the components of the centre, which implies significant cost for the electrical supply company. It is because of this that, at present, there is great interest in that the equipment occupies lesser and lesser space.

On the other hand the electrical connections between the high voltage cubicles and the transformer and between the low voltage panel and the transformer are made by means of cabling that is very exposed, possibly giving rise to undesirable accidents and faults. Furthermore, this cabling can be carried out "in situ", which requires specialised operators to correctly carry out the different connections, environmental and local conditions for the carrying out of said operations not always being optimum.

Specifically, the connections between the high voltage operation switchgear and the transformer are carried out by cables with terminals at their ends, the terminals normally being made in close work, because of which they are not submitted to pertinent testing to verify the quality of the connection.

Similarly, the connection between the transformer and the low voltage distribution panel is made by cables with terminals at their ends, these connections attaining high temperatures in normal operational conditions. On occasions bad workmanship in the terminals or a bad tightening is of these terminals in the low voltage panel can cause fires in the installation, this being one of the possible causes of fault in an electrical transformer centre.

On the other hand, we have the problem of the replacing or changing of the medium voltage fuses. The problem occurs when in these operations precipitated decisions are taken or are not carried out adequately and in this way for example:
► Bad placing of the fuse, causing bad contact and excessive heating that finally ends up by causing the failure of the installation. This incidence can even bring-about tripping of the substation or main station protection and the loss of the high voltage switchgear.
► Non-availability of the suitable thickness (according to the transformer rating) and another thickness is used, with negative consequences for the medium voltage cubicle, or for the transformer protection.
► When a fuse blows, it is recommended to change the three phases (three fuses) in case one of them has been damaged, but this task not always is carried out, because of which eventually untimely tripping can take place, without any apparent cause.

In brief, we can say that the electrical transformer centres of the aforementioned type represent a series of potentially important problems, among which the following can be identified:
- A large amount of space is required for placing all of the components of the centre, with the consequent economic cost in the acquisition or leasing of the ground.
- The cabling between the different parts or components of the transformer centre, that is, between the cubicles, the transformer and the low voltage panel, is very exposed and can result in accidents and undesirable faults.
- The cabling between the mentioned protection cubicle, the transformer and the low voltage panel, can be carried out "in situ", which requires specialised operators who correctly make the different connections.
- Fuse replacement is not always adequately carried out, with consequent risk for the installation.

These difficulties lead to a tendency to eliminate the external connections between the different components, as well as to a reduction of the their size, integrated solutions being presently known, for example, that are formed by single unit transformer centres, namely, in which externally a single unit is observed that integrates the functions of high voltage, transformer and low voltage, accommodating the functions of high voltage and fuses within the actual tank of the transformer and therefore submerged in the same dielectric fluid.

These solutions solve the previously mentioned problems but, by being fabricated as a unit single in the case of faults they must be retired and completely replaced, which requires having complete reserve units, instead of being able to replace only the damaged function. It is necessary to bear in mind as well the fact that the transformer centres have different ratings and voltages of use according to need, because of which a complete range of reserve transformer centres will have to be available.

As regards the protection function, it is usually performed using fuses, that, as has been said, are placed in the actual transformer tank, so that it may react rapidly to the fault. The fuse is surrounded with dielectric fluid. This action automatically implies a series of potential risks for people and equipment due to the following reasons:
- An electrical arc between the entry and the fuse connections, upstream, can generate an amount of energy that degenerates into an explosion of the tank and fire in the dielectric content in the transformer tank.
- An incomplete blowing of the fuse causes excessive heating and the temperatures reached can bring-about the gasification of the dielectric fluid causing an increase of the internal pressure that can cause permanent distortions in the metal tank of the transformer that in turn can degenerate into points of leakage of oil.
- The rupture of the fuse casing causes the material that it has within it to be emitted. This material is usually sand that contaminates the dielectric liquid, as well as the functional parts of the transformer. This hinders the repair of the equipment due to the contamination.

The present applicant is also holder of the application PCT ES01/00370, relating to a compact modular transformer centre, in which both the high voltage equipment and the low voltage panel are mounted on the actual transformer, the transformer having a horizontal extension, like a raised workbench, on which the high voltage equipment is mounted, a number of insertable terminals being placed in the front face of the workbench for the connection, via connection assemblies, of the protection module of the high voltage equipment. The connection assemblies can be, for example, of the type described in the European patent n 0 520 933, held by the same person.

One of the principal advantages of this modular centre relates to the fact that it unifies in a single assembly the three basic components of a transformer centre but, with the particularity that the low voltage panel and the high voltage equipment are conventional and each one maintains its usual functionality, allowing in this way a reduction of costs and a greater modularity and interchange-ability in the case of faults or changes in the electrical schematic layout of the centre. For this purpose the transformer has a series of modifications in its cover that consist of a horizontal extension or raised workbench for the connection of the high voltage equipment, and a vertical pillar, as an extension of the cover, and that is also full of dielectric fluid, for the connection of the low voltage panel.

EP-A-0.822.632 discloses a device comprising the features of the preamble of claim 1.

### DESCRIPTION OF THE INVENTION

The invention is defined by the features of claim 1. Preferred embodiments are defined in the dependent claims.

The transformer centre that is proposed has been conceived to solve the difficulties previously set out, based on a simple solution but non the less effective, based on unifying the transformer, the high or medium voltage cubicle and the low voltage panel in a single compact assembly of reduced dimensions, but with the particularity that this compacting is fully modular since, not only the high voltage equipment and low voltage panel are independent, but that the transformer is also independent, the other two items of equipment being directly connected onto the same standard cover.

Specifically, the electrical connection between the medium voltage cubicle and the transformer is made directly on the cover of this latter, through female type connecting insulating bushings placed in the actual standard cover of the transformer, the electrical connection being established by means of insertable terminals or connection assemblies. For this, the medium voltage cubicle also incorporates a number of female-type terminals into which the aforementioned rapid-insert terminals or connection assemblies are connected.

In this way the high or medium voltage cubicle stays supported, via its base, directly on the cover of the transformer, and the control elements of the cubicle are frontally placed to facilitate access by the operators.

The electrical connection is direct, that is, without external cable leads with terminals, nor a busbar unit, this connection being factory-made, because of which it avoids being exposed to the outside, solving the problems due to the existence of cabling. Furthermore, this connection is not fixed but of the plugable type, which allows the connection and disconnection of the cubicle when necessary, maintaining each independent unit its functional capacity, with the special particularity of that both the high and medium voltage cubicles and the transformer are conventional, not requiring the use of special units. This allows standard "off-shelf" equipment for the mounting or replacement of any of the units, in the case of repair, or change of the electrical schematic layout used.

The connections between the transformer and the low voltage panel can be made using the traditional solution by means of the use of cables or low voltage bars, so that the three units that form the centre are completely conventional with the advantages already mentioned.

Nevertheless, to achieve a more compact assembly, it has been envisage that the connection between the transformer and the low voltage panel is made through a type of vertical pillar full of oil, that is constructed as an extension of the transformer, forming part of it, and whose connections reach the outside through the front of the pillar, the busbars of the low voltage module being bolted directly onto it, busbar that usually are placed in the rear part of the panel, so that the low voltage panel is vertically positioned, suspended from the pillar, with all its control elements positioned frontally, thus allowing easy and convenient access for the operators.

The compact transformer centre obtained according to this last possibility will occupy minimum space, reducing in this way the space needs for the installation, only the entry and outlet cabling of the high or medium voltage loop, the low voltage outlet, and optionally the low voltage leads, being visible; a conventional medium voltage cubicle, a low voltage panel and a transformer, also conventional, with one small modification in its upper cover, being used for this purpose.

On the other hand, and in order to solve the problems mentioned during fuse replacement, the medium voltage cubicle can incorporate within it the fuses of the three phases, thus also acting as a protection cubicle, and since the their blowing should solely be due to a fault of the transformer, the cubicle would be changed and the fuses changed in-factory, thus preventing that errors in mounting occur during maintenance operations.

The protection cubicle can optionally incorporate current transformers associated with a relay that complements the protection by the system fuses, providing functions of three-phase circuit interruption and protection for faults such as earth faults, overloads, short circuits at low voltage, operation of one or two phases due to blowing of a fuse, current measurement, voltage, power and even temperature, measurement. This relay can optionally communicate with an integrated remote control system that will allow the condition of the transformer centre to be consulted, as well as to independently activate or deactivate the protection functions required.

Likewise, in order to facilitate easy and convenient access for operators, access to the voltage terminals regulator of the transformer is also from the front.

Therefore, in the modular and compact centre that is proposed there is medium voltage switchgear and a conventional low voltage panel as regards its structure and functionality, it being possible to use a conventional or slightly modified transformer, this modification being the incorporation or extension of the transformer cover, vertical in the shape of a pillar, for the support and connection of the low voltage panel and the inclusion of a number of female connectors for its connection with the medium voltage switchgear.

As is evident, this unification into a single assembly of the three basic components that comprise a transformer centre allows a reduction of space to be obtained, in addition to increasing safety, set up time being reduced since the connections come, tested, from the factory; and it is required only to position the assembly in the place planned for it, completely avoiding the problems and disadvantages referred to in the previous section.

Likewise, since the transformer centre is modularly fabricated, that is, by several independent units interconnected with each other, when a fault occurs, it is possible to rapidly replace the damaged unit, it being possible to carry out this replacement in the actual transformer centre or, preferably, in-factory. In this case, during the time of repair or replacement of the damaged unit, it would be necessary to substitute the transformer centre with a replacement, but the actual modularity of the system allows that it not be necessary to have a different centre for every need, but rather it is only necessary to have various individual units that are combined, in each case, to form the compact transformer centre required .

### DESCRIPTION OF THE DRAWINGS

To supplement the description that is being carried out, and with the aim of leading to a better understanding of the characteristics of the invention, in agreement with a preferred example of its practical embodiment, as an integral part of said description it is accompanied by a game of drawings where in an illustrative and not limiting way, the following have been represented:
Figure 1.- Shows a front view of an conventional electrical transformer centre.
Figure 2.- Shows a general perspective representation of the transformer centre of reduced dimensions carried out in accordance with the purpose of the present invention.
Figure 3.- Shows a general perspective representation of the medium voltage cubicle and of the transformer, along with the coupling system between the transformer and medium voltage cubicle, and coupling of the low voltage panel by means of a pillar.
Figure 4.- Shows a general perspective representation of the medium voltage cubicle and of the transformer, with a conventional low voltage outlet, along with the coupling system between the transformer and medium voltage cubicle.

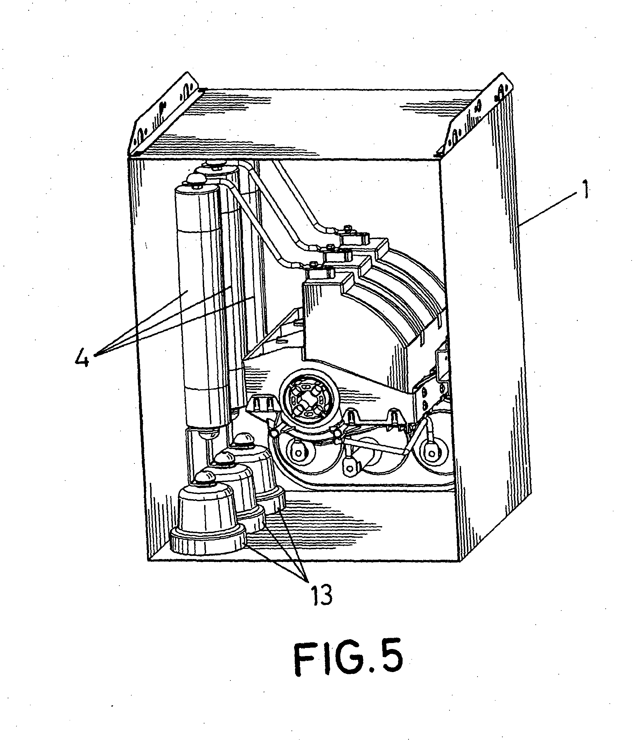

Figure 5.- Shows, in perspective, a general view of the medium voltage cubicle in which the transformer protection fuses are incorporated, in accordance with the object of the invention.

### PREFERABLE EMBODIMENT OF THE INVENTION.

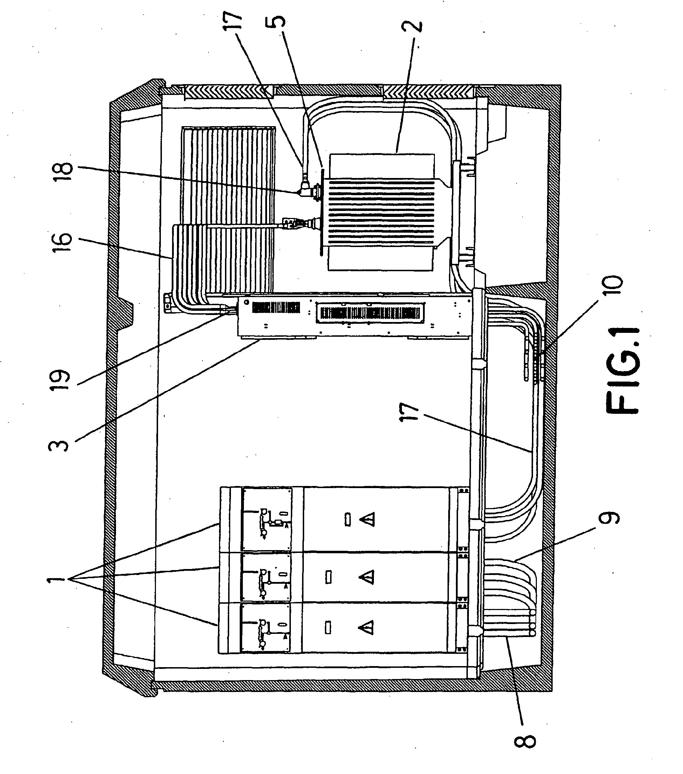

In Figure 1 a typical configuration of a transformer centre, formed by a group medium voltage cubicles (1), a transformer (2) and a low voltage panel (3), is shown; the cubicles (1) being connected to the transformer through the corresponding cabling (17) and terminals (18); whereas the low voltage panel (3) is also connected to the transformer through cabling (16) and the connection terminals (19). The entry (8) and outlet (9) of the high voltage loop have also been shown in this figure, as well as the low voltage distribution cables (10) that come from the panel (3) to provide electrical supply for the corresponding installation.

Well then, the electrical transformer centre, of reduced dimensions, that is proposed, includes, as is normal, one or several medium voltage cubicles (1), a transformer (2) and a low voltage panel (3), the innovation of the invention being based in that said three components are mounted together forming a compact module, where the medium voltage cubicle (1) and the actual low voltage panel (3) are directly mounted on the transformer (2), specifically on the actual cover (5) of the transformer (2), but this assembly is modular, that is, that each one of its components preserves its actual characteristics and functionalities.

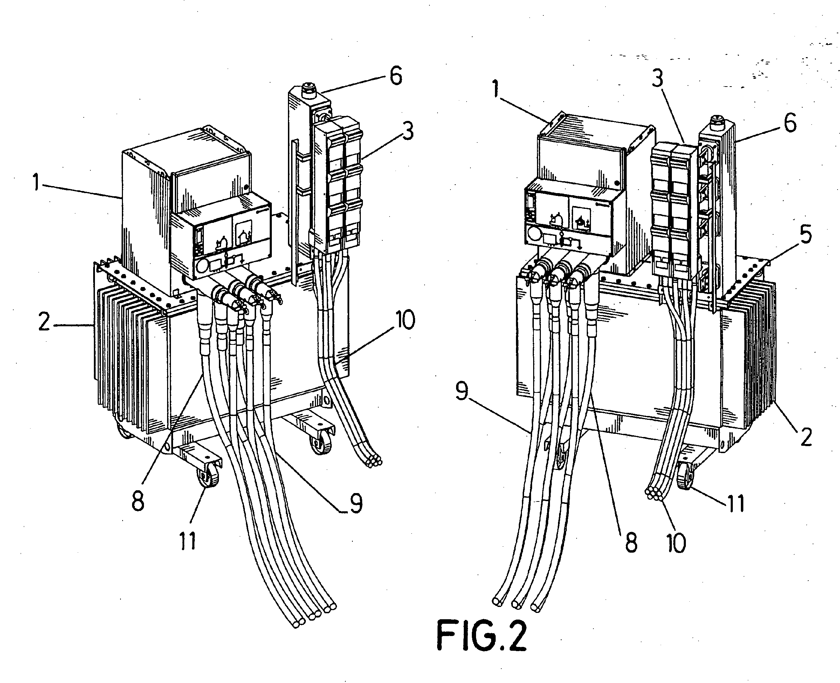

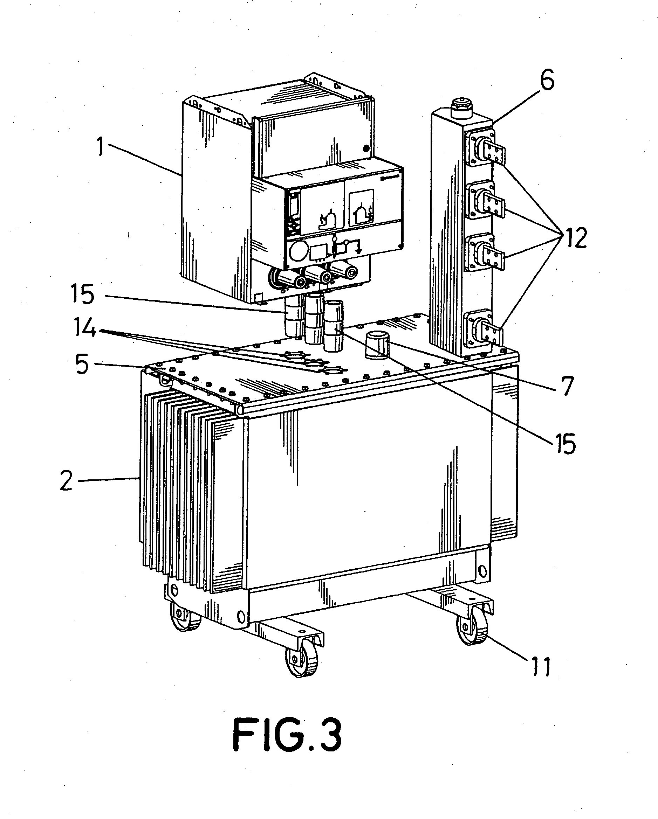

Specifically, as is seen in Figures 2 and 3, the medium voltage cubicle (1) is directly supported, by its lower base, on the cover of the transformer (2), the electrical connection between both elements being made by means of plugable terminals or connection assemblies (15), such as, for example, those described in the European patent n 0 520 933, held by this same applicant; for this purpose the transformer having a number of female type connection terminals (14) placed in the actual cover (5) of the transformer (2) and the medium voltage cubicles (1) having similar terminals (13).

According to the preferred embodiment represented in Figures 2 and 3, the cover (5) of the transformer (2) incorporates a pillar (6) formed by a vertical extension of the transformer cover (2), and therefore it is also full of oil, the connections to the transformer being placed within it; connections that extend to the outside by means of the corresponding terminals (12), through the front of the pillar (6); the busbars of the low voltage module (3) being bolted directly to said connections (12) These busbars are placed at the rear part of the low voltage panel (3), so that this latter is literally suspended from the pillar (6), all its control elements being frontally positioned, thus allowing easy and convenient access for the operators.

When not completely filled with oil, the pillar (6) furthermore can serve as an expansion tank, in this way allowing expansion of the dielectric fluid, as a consequence of the expansion, basically of the transformer elements (2), because of temperature rise. Said pillar (6) thus acts as an added safety element for the transformer centre.

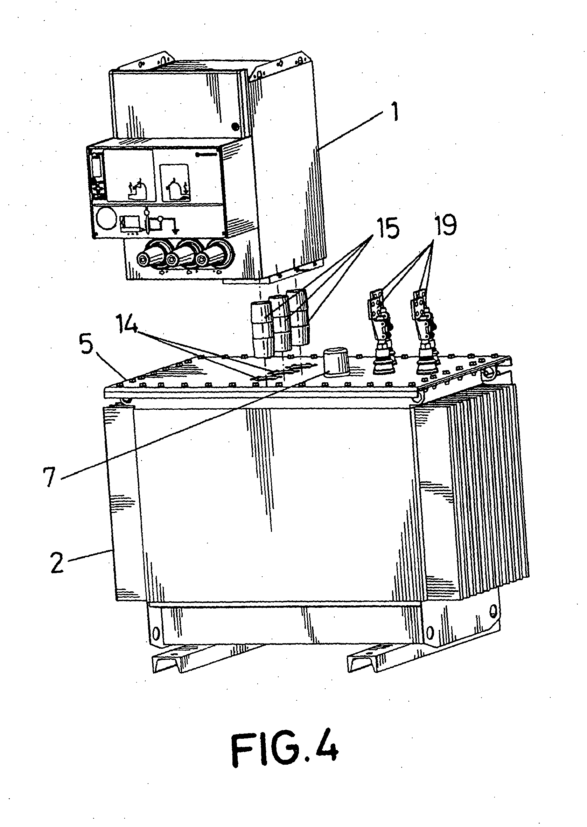

In another variant of embodiment, shown in Figure 4, the connection between the low voltage panel (3) and the transformer (2) can be made by means of a traditional solution based on cables or live bars, in this solution the cover of the transformer does not undergo any modification other than the incorporation of the connection terminals (14).

In the drawings of this invention, a high voltage or medium voltage protection cubicle (1) has been shown, however other cubicles can be added to this one in order to form the electrical schematic layout required. Also, we are referring to the fact the protection function is carried out using fuses, but the transformer centre of the invention would be equally valid if a circuit breaker were used for performing the functions of protection.

The same medium voltage cubicle (1) optionally incorporates within it, as is seen in Figure (5), the fuses (4) for the protection of the transformer.

In this way when one of the fuses (4) blows due to a fault in the transformer, the protection cubicle (1) is removed, along with the transformer (2) and a new one is positioned, with which the three fuses are simultaneously replaced, thus avoiding possible errors in the operation.

In order to increase the protection capability of the protection cubicle (1), a relay can optionally be incorporated, which, associated with current transformers or sensors, complement the protection of the system by fuses, providing protection functions such as earth faults, overloads, short circuits at low voltage, single or two phase operation due to blowing of a fuse, current measurement, voltage and power measurement, and even temperature, data transmission, etc.

In a preferred embodiment the current transformers or sensors are formed by means of a number of toroidal coils that are positioned around the connection terminals (15) between the transformer (2) and the protection cubicle (1), for which advantage is made of the separation space between both items of medium voltage equipment.

Furthermore, the relay can optionally communicate with an integrated remote control system that will allow the condition of the transformer centre to be consulted, as well as to independently activate or deactivate the required protection functions or to carry out work in the transformer centre by means of remote signalling.

The low voltage panel (3) has the corresponding outlets (10) for low voltage distribution and corresponding supply to the buildings or facilities concerned.

Finally, to note that the modular compact assembly forms a unit that can move easily within the transformer centre, since the transformer can incorporate wheels (11), and therefore, the assembly moves easily, in contrast to the usual centres in which the high or low voltage modules and the low voltage panel are not moveable, and the transformer, although incorporating wheels, have the limitation of the cable leads that prevent its movement.

## Claims

1. Modular transformer centre, of reduced dimensions, including one or several medium voltage cubicles, a transformer and a low voltage panel, the medium voltage protection cubicle (1) being connected to the transformer, (2) and the transformer being connected to the low voltage panel (3), from which project the
corresponding cables for distribution and supply for facilities or buildings at low voltage; and the medium voltage cubicle (1) and the low voltage panel (3) are mounted on the actual transformer (2), that acts as a sustaining and support element for the other two elements (1) (3); **characterised in that** the connections between the transformer (2) and the medium voltage cubicle (1) are made using female-type terminals (13) (14), placed, respectively, on the conventional cover of the transformer and in the low voltage cubicle (1); the electrical connection between both being carried out by means of plugable terminals or connection assemblies (15), in such a way that medium voltage cubicle (1) is supported directly on the cover of the transformer, and all of the control elements of the cubicles (1) are frontally placed to facilitate access by the operators.

2. Modular transformer centre of reduced dimensions, according to 1^{st}. claim, **characterised in that** the high or medium voltage protection function is carried out through the actual medium voltage cubicle (1) that incorporates within it the protection fuses (4), in this way forming a protection cubicle, so that the replacement of one or several fuses is carried out by changing the complete medium voltage protection cubicle (1).

3. Modular transformer centre of reduced dimensions, according to 1^{st}. claim, **characterised in that** the medium voltage protection cubicle (1) incorporates three plugable terminals (15) for its connection with the transformer (2).

4. Modular transformer centre of reduced dimensions, according to 1^{st}. 2^{nd}. and 3^{rd}. claims, **characterised in that** between the medium voltage protection cubicle (1) and the transformer (2) current transformers or sensors associated with a relay that complements the protection of the system by fuses, are placed, providing protection functions such as earth faults, overloads, short circuits at low voltage, single or two phase operation due to blowing of a fuse, current measurement, voltage and power and even temperature measurement, it being envisaged that this relay can communicate with an integrated remote control system that will allow the condition of the transformer centre to be consulted, as well as to independently activate or deactivate the protection functions required.

5. Modular transformer centre of reduced dimensions, according to 1^{st}., 3^{rd}. and 4^{th}. claims, **characterised in that** the plugable connections are of the type that are made using female or lampshade-type terminals, and connection assemblies.

6. Modular transformer centre of reduced dimensions, according to 1st. claim, **characterised in that** the connections between the transformer (2) and the low voltage panel (3) are made via a pillar (6), formed as a vertical extension of the transformer cover, and filled with oil, in whose interior the connections to the transformer (2) are placed, connections that extend to the outside of the pillar (6) by means of terminals (12), that are positioned in the front of the pillar (6), and onto which the electrical contacts of the actual low voltage panel (3) are directly bolted, the panel remaining vertically hanging from the pillar, in such a way that the control elements are frontally placed to facilitate access by the operators.

7. Modular transformer centre of reduced dimensions, according to 1st. and 6^{th}. claims, **characterised in that** the low voltage pillar does not fill completely, thus acting as an expansion tank, allowing the expansion of the dielectric fluid as a consequence of the expansion, basically of the transformer elements (2), because of temperature rise.

8. Modular transformer centre of reduced dimensions, according to previous claims, **characterised in that** the transformer (2) is mounted on wheels (11) that allow the assembly or single and compact unit that forms the high or medium voltage protection cubicle (1), the transformer (2) and the low voltage panel (3), to be moved.

## Patentansprüche

1. Modulare Transformatorstation mit verringerten Abmessungen, umfassend eine oder mehrere Mittelspannungszelle(n), einen Transformator und eine Niederspannungs-Schalttafel, wobei die Mittelspannungs-Schutzzelle (1) mit dem Transformator (2) verbunden ist, und der Transformator mit der Niederspannungs-Schalttafel (3) verbunden ist, von der die entsprechenden Kabel zur Verteilung und Versorgung für Einrichtungen oder Gebäude mit Niederspannung ausgehen, und wobei die Mittelspannungszelle(n) (1) und die Niederspannungs-Schalttafel (3) an dem eigentlichen Transformator (2) befestigt sind, welcher als ein stützendes und tragendes Element für die anderen zwei Elemente (1, 3) wirkt, **dadurch gekennzeichnet, dass** die Verbindungen zwischen dem Transformator (2) und der Mittelspannungszelle (1) unter Verwendung von buchsenartigen Anschlüssen (13, 14) hergestellt sind, welche je auf dem konventionellen Deckel des Transformators und in der Mittelspannungszelle (1) angeordnet sind, wobei die elektrische Verbindung zwischen den beiden mittels steckbarer Anschlüsse oder Verbindungsbaugruppen (15) ausgeführt ist, derart, dass die Niederspannungszelle (1) direkt auf dem Deckel des Transformators getragen ist, und alle Kontrollelemente der Zellen (1) an der Vorderseite angeordnet sind, um Zugang durch die Bedienperson zu erleichtern.

2. In Modulen aufgebaute Transformatorstation mit verringerten Abmessungen nach Anspruch 1, **dadurch gekennzeichnet, dass** die Hochspannungs- oder Mittelspannungs-Schutzfunktion durch die eigentliche Mittelspannungszelle (1) ausgeführt ist, wobei im Inneren derselben die Schutzsicherungen (4) eingebaut sind, derart, dass sie eine Schutzzelle bildet, sodass das Austauschen einer oder mehrerer Sicherungen durch Auswechseln der kompletten Mittelspannungs-Schutzzelle (1) durchgeführt wird.

3. In Modulen aufgebaute Transformatorstation mit verringerten Abmessungen nach Anspruch 1, **dadurch gekennzeichnet, dass** die Mittelspannungs-Schutzzelle (1) drei steckbare Anschlüsse (15) zur Verbindung derselben mit dem Transformator (2) aufnimmt.

4. In Modulen aufgebaute Transformatorstation mit verringerten Abmessungen nach Anspruch 1, 2 und 3, **dadurch gekennzeichnet, dass** zwischen der Mittelspannungs-Schutzzelle (1) und dem Transformator (2) Stromumformer oder Stromsensoren angeordnet sind, welche einem Relais zugeordnet sind, das den Schutz des Systems durch Sicherungen ergänzt und Schutzfunktionen bereitstellt, wie etwa Erdschlussschutz, Überlastungsschutz, Schutz bei Kurzschlüssen im Niederspannungsbereich, Einphasen- oder Zweiphasenbetrieb auf Grund von Sicherungsausfall, sowie Strommessung, Spannungs-, Leistungs- und auch Temperaturmessung, wobei vorgesehen ist, dass dieses Relais mit einem integrierten Fernbediensystem kommunizieren kann, welches ermöglicht, den Zustand der Transformatorstation abzufragen sowie die erforderlichen Schutzfunktionen unabhängig zu aktivieren und zu deaktivieren.

5. In Modulen aufgebaute Transformatorstation mit verringerten Abmessungen nach Anspruch 1, 3 und 4, **dadurch gekennzeichnet, dass** die steckbaren Verbindungen von dem Typ sind, der unter Verwendung von buchsenartigen oder tulpenartigen Anschlüssen und von Verbindungsbaugruppen hergestellt ist.

6. In Modulen aufgebaute Transformatorstation mit verringerten Abmessungen nach Anspruch 1, **dadurch gekennzeichnet, dass** die Verbindungen zwischen dem Transformator (2) und der Niederspannungs-Schalttafel (3) über eine Säule (6) hergestellt sind, welche als vertikale Erweiterung auf dem Transformatordeckel ausgebildet und mit Öl gefüllt ist, wobei im Inneren derselben die Verbindungen zu dem Transformator (2) angeordnet sind, wobei sich die Verbindungen an die Außenseite der Säule (6) erstrecken, mit Hilfe von Anschlüssen (12), welche im vorderen Teil des Turmaufbaus (6) angeordnet sind, und an welchen die elektrischen Kontakte der eigentlichen Niederspannungs-Schalttafel (3) direkt angeschraubt sind, wobei die Schalttafel vertikal an dem Turmaufbau hängt, derart, dass die Kontrollelemente an der Vorderseite angeordnet sind, um Zugang für die Bedienpersonen zu erleichtern.

7. In Modulen aufgebaute Transformatorstation mit verringerten Abmessungen nach Anspruch 1 und 6, **dadurch gekennzeichnet, dass** der Niederspannungs-Säule nicht vollständig zu füllen ist, wobei er als ein Expansionsgefäß wirkt, welches das Ausdehnen des dielektrischen Fluids als eine Folge der Wärmeausdehnung erlaubt, im Wesentlichen der Transformatorelemente (2), auf Grund eines Temperaturanstiegs.

8. In Modulen aufgebaute Transformatorstation mit verringerten Abmessungen nach den vorhergehenden Ansprüchen, **dadurch gekennzeichnet, dass** der Transformator (2) auf Rädern (11) gebaut ist, welche ermöglichen, dass die Baugruppe oder die einteilige und kompakte Einheit, welche die Hoch- oder Mittelspannungs-Schutzzelle (1), den Transformator (2) und die Niederspannungs-Schalttafel (3) bildet, beweglich ist.

## Revendications

1. Poste de transformation modulaire de dimensions réduites, comprenant un ou plusieurs blocs moyenne tension, un transformateur et un panneau basse tension, le bloc de protection moyenne tension (1) étant raccordé au transformateur (2) et le transformateur étant raccordé au panneau basse tension (3) d'où sortent les câbles correspondants de distribution et d'alimentation pour des installations ou des bâtiments à basse tension ; et le bloc moyenne tension (1) et le panneau basse tension (3) sont montés sur le transformateur lui-même (2), fonctionnant comme un élément de soutien et de support pour les deux autres éléments (1) (3) ; **caractérisé en ce que** les raccordements entre le transformateur (2) et le bloc moyenne tension (1) sont réalisés au moyen de bornes femelles (13) (14), placées, respectivement, sur le couvercle traditionnel du transformateur et dans le bloc basse tension (1) ; le raccordement électrique entre les deux étant réalisé au moyen de bornes enfichables ou d'assemblages de raccordement (15), de sorte que le bloc moyenne tension (1) soit supporté directement sur le couvercle du transformateur, et tous les éléments de commande des blocs (1) sont situés de façon frontale pour faciliter leur accès par des opérateurs.

2. Poste de transformation modulaire de dimensions réduites selon la revendication 1, **caractérisé en ce que** la fonction de protection haute tension ou moyenne tension est réalisée au moyen du bloc moyenne tension lui-même (1) qui incorpore les fusibles de protection (4) en son sein, formant de cette façon un bloc de protection, permettant le remplacement d'un ou plusieurs fusibles grâces au remplacement intégral du bloc de protection moyenne tension (1).

3. Poste de transformation modulaire de dimensions réduites selon la revendication 1, **caractérisé en ce que** le bloc de protection moyenne tension (1) incorpore trois bornes enfichables (15) pour son raccordement avec le transformateur (2).

4. Poste de transformation modulaire de dimensions réduites selon les revendications 1, 2 et 3, **caractérisé en ce que**, entre le bloc de protection moyenne tension (1) et le transformateur (2), sont situés des capteurs ou des transformateurs de courant associés à un relais qui ajoute à la protection du système au moyen de fusibles, assurant des fonctions de protection telles que des défauts de mise à la terre, des surcharges, des courts-circuits à faible tension, le fonctionnement monophasé ou biphasé en raison de la rupture d'un fusible, la mesure de courant, de la tension et de la puissance et même la mesure de la température, étant envisagé que ce relais puisse communiquer avec un système de commande intégrée à distance permettant une consultation de l'état du poste de transformation ainsi qu'une activation ou une désactivation des fonctions de protection nécessaires de façon indépendante.

5. Poste de transformation modulaire de dimensions réduites selon les revendications 1, 3 et 4, **caractérisé en ce que** les raccordements enfichables sont du type réalisés au moyen de bornes femelles ou du type utilisé dans les abat-jour, et des assemblages de raccordement.

6. Poste de transformation modulaire de dimensions réduites selon la revendication 1, **caractérisé en ce que** les raccordements entre le transformateur (2) et le panneau basse tension (3) sont réalisés au moyen d'une colonne (6), réalisée sous forme d'un prolongement vertical du couvercle de transformateur et remplie d'huile, à l'intérieur de laquelle sont placés les raccordements au transformateur (2), ces raccordements s'étendant en dehors de la colonne (6) grâce à des bornes (12) positionnées sur l'avant de la colonne (6) et sur lesquelles sont directement boulonnés les contacts électriques du panneau basse tension (3) lui-même, ce panneau restant suspendu verticalement à la colonne, de sorte que les éléments de commande soient situés frontalement pour faciliter l'accès par des opérateurs.

7. Poste de transformation modulaire de dimensions réduites selon les revendications 1 et 6, **caractérisé en ce que** la colonne basse tension n'est pas totalement remplie, agissant ainsi comme un réservoir d'expansion permettant l'expansion du fluide diélectrique en conséquence de la dilatation, essentiellement des éléments du transformateur (2), à cause d'une augmentation de la température.

8. Poste de transformation modulaire de dimensions réduites selon les revendications précédentes, **caractérisé en ce que** le transformateur (2) est monté sur des roulettes (11) permettant le déplacement de l'assemblage de l'unité unique et compacte constituée du bloc de protection haute ou moyenne tension (1), du transformateur (2) et du panneau basse tension (3).
